# EUROPÄISCHE PATENTSCHRIFT

(11) **EP 3 717 140 B1**
(45) Veröffentlichungstag und Bekanntmachung des Hinweises auf die Patenterteilung: **05.01.2022**
(21) Anmeldenummer: 18814535.3
(22) Anmeldetag: 29.11.2018
(51) Int. Cl.: B05C 11/10, B29B 13/02

(54) **VORRICHTUNG UND VERFAHREN ZUM AUFSCHMELZEN EINES SCHMELZKLEBSTOFFES**
DEVICE AND METHOD FOR MELTING A HOT-MELT ADHESIVE
DISPOSITIF ET PROCÉDÉ DE FUSION D'UN ADHÉSIF THERMOFUSIBLE

(30) Priorität: 01.12.2017 DE 102017221708
(43) Veröffentlichungstag der Anmeldung: 07.10.2020
(73) Patentinhaber: Klebchemie M.G. Becker GmbH & Co. KG, 76356 Weingarten/Baden (DE)
(72) Erfinder: FANDREY, Jens, 75180 Pforzheim (DE); SCHOG, René, 50189 Elsdorf (DE)
(74) Vertreter: Büchel, Edwin
(86) Internationale Anmeldenummer: PCT/EP2018/082962
(87) Internationale Veröffentlichungsnummer: WO 2019/106071

(56) Entgegenhaltungen:
- EP-A1- 0 434 617
- EP-A2- 0 102 804
- DE-A1-102006 009 113
- DE-U1-202009 014 470
- US-A- 5 318 198
- US-A1- 2009 236 360

## Beschreibung

Die Erfindung betrifft eine Vorrichtung zum Aufschmelzen eines Schmelzklebstoffes umfassend eine Heizplatte und einen Stempel. Weiterhin betrifft die Erfindung ein Verfahren zum Aufschmelzen eines Schmelzklebstoffes umfassend ein Bereitstellen des Schmelzklebstoffes in einem Vorratsbehälter und ein Pressen des Schmelzklebstoffes an eine Heizplatte.

Vorrichtungen zum Aufschmelzen von Schmelzklebstoffen, die auch als Vorschmelzer bezeichnet werden, dienen zur Erwärmung von Schmelzklebstoffen, die in aufgeschmolzener Form zum Beispiel auf Oberflächen aufgetragen werden können.

Bekannte Vorschmelzer sind beispielsweise Fass-Schmelzer und Beutelschmelzer, die eine Pumpe umfassen können.

Im Fall von Fass-Schmelzern wird eine Heizplatte mit Finnen in das Fass eingetaucht wird. Nachteilig ist, dass größere Restmengen im Fass verbleiben und nicht genutzt werden können.

Als Vorrichtung zum Aufschmelzen ist auch das Schmelzklebstoffgerät Topmelter 2518 des Herstellers Klebchemie M.G. Becker GmbH & Co. KG bekannt. Der Topmelter 2518, der einen Beutelschmelzer ohne Pumpe darstellt, dient zum Aufschmelzen und Fördern unter anderem von reaktiven, vernetzenden Polyurethan-Schmelzklebstoffen. Der Schmelzklebstoff wird in einem Aluverbund-Beutel, der eine Masse von 18 kg bis 20 kg an Schmelzklebstoff enthält, vorgelegt. Der Aluverbund-Beutel wird zunächst aus einer Hülse gezogen, geöffnet und in einem Tank, der fester Bestandteil des Topmelters 2518 ist, positioniert, so dass der Schmelzklebstoff auf einer Heizplatte angeordnet ist. Ferner besitzt der Topmelter 2518 einen Zylinder, der oberhalb des Tanks, enthaltend den Aluverbund-Beutel, angeordnet ist, sich nach unten bewegt und auf den Aluverbund-Beutel und damit auf den aufzuschmelzenden Schmelzklebstoff drückt. Entsprechend sind die Heizplatte, der Schmelzklebstoff und der Zylinder vertikal übereinander angeordnet. Im Tank wird der Schmelzklebstoff geschmolzen und durch den Zylinder zu einem Verteilersystem gedrückt. Der Tank kann eine Masse von maximal 25 kg fassen und 18 kg bis 20 kg pro Stunde werden an Schmelzklebstoff bei einem Betriebsdruck des Zylinders von 6 bar und einer Klebstofftemperatur zwischen 120°C und 150°C gefördert.

EP 0 565 752 A1 beschreibt ein Verfahren zum Beschichten von flächigem Trägermaterial sowie eine Beschichtungsanlage zur Durchführung des Verfahrens mit einer Auftragseinheit, wobei keine Einzelheiten bezüglich des Vorschmelzers offenbart sind.

DE 20 2009 014470 U1 beschreibt eine Schmelz- und Auftragevorrichtung umfassend eine einen Schmelzkleber enthaltende Verpackung.

DE 10 2006 009113 A1 beschreibt eine Vorrichtung zum Aufschmelzen von schmelzbaren Elementen, insbesondere Klebstoff.

EP 102804 A2 betrifft Verfahren und Mittel zum Abgeben einer schmelzbaren, durch Feuchtigkeit härtbaren Zusammensetzung aus einer Verpackung, in der sie gelagert ist, ohne vorzeitige Aushärtung der Zusammensetzung.

DE 37 33 029 C1 betrifft eine Vorrichtung zum Verflüssigen eines hochpolymeren, thermoplastischen Werkstoffes, insbesondere eines Schmelzklebers, in einem Transportbehälter.

Nachteilig an den Vorrichtungen und dem Verfahren gemäß dem Stand der Technik ist, dass durch die begrenzte Größe der handhabbaren Gebinde an Schmelzklebstoff die Fördermenge an aufgeschmolzenem Schmelzklebstoff pro Zeiteinheit begrenzt ist beziehungsweise größere Restmengen an Schmelzklebstoff in den Vorlagebehältern verbleiben.

Eine Aufgabe der vorliegenden Erfindung ist es, eine Vorrichtung und ein Verfahren bereitzustellen, die eine Erhöhung der Fördermenge sowie eine sichere Handhabung von größeren Gebinden an Schmelzklebstoff ermöglichen. Weiterhin soll mit der vorliegenden Erfindung eine im Behälter verbleibende Restmenge reduziert werden.

Gelöst wird die Aufgabe durch eine Vorrichtung zum Aufschmelzen eines Schmelzklebstoffes umfassend eine Heizplatte, einen Stempel, der Stempel umfassend eine Stempelstirnfläche, eine Halterung und einen Vorratsbehälter mit einem inneren Volumen von mehr als 50 L, wobei der Vorratsbehälter eine starre Mantelwand und zwei gegenüberliegende Seitenflächen aufweist und den Schmelzklebstoff enthält, die Stempelstirnfläche und die Heizplatte gegenüberliegend angeordnet sind und der Vorratsbehälter so in der Halterung aufgenommen ist, dass der Schmelzklebstoff zwischen dem Stempel und der Heizplatte angeordnet ist, wobei, der Vorratsbehälter aus der Vorrichtung entnehmbar ist, dadurch gekennzeichnet, dass die Heizplatte eine V-förmige Oberflächenstruktur aufweist, die durch Rippen gebildet wird und wobei die V-förmige Oberflächenstruktur einen Ablauf für aufgeschmolzenen Schmelzklebstoff bildet.

Darüber hinaus wird die Aufgabe gelöst durch ein Verfahren zum Aufschmelzen eines Schmelzklebstoffes umfassend die folgenden Schritte:
a. Bereitstellen des Schmelzklebstoffs in einem Vorratsbehälter mit einem inneren Volumen von mehr als 50 L, wobei der Vorratsbehälter eine starre Mantelwand und zwei gegenüberliegende Seitenflächen aufweist,
b. Anordnen des Vorratsbehälter, enthaltend den Schmelzklebstoff in ungeschmolzener Form, in einer erfindungsgemäßen Vorrichtung zum Aufschmelzen, umfassend eine Heizplatte, so dass eine erste der zwei gegenüberliegenden Seitenflächen an der Heizplatte angeordnet ist,
c. Fördern des Schmelzklebstoffs relativ zum Vorratsbehälter und in Richtung der Heizplatte, wobei die zwei gegenüberliegenden Seitenflächen des Vorratsbehälters offen sind, so dass der Schmelzklebstoff mit der Heizplatte in Kontakt gebracht wird und aufgeschmolzener Schmelzklebstoff entsteht, der an der Heizplatte abfließt, wobei die Vorrichtung zum Aufschmelzen einen Stempel, der Stempel umfassend eine Stempelstirnfläche, aufweist und der Schmelzklebstoff mittels des Stempels bei einem Pressdruck an die Heizplatte gepresst wird und der Pressdruck bevorzugt 6 bar und mehr beträgt.

Die erfindungsgemäße Vorrichtung und das erfindungsgemäße Verfahren dienen der Verarbeitung von großen Gebinden an Schmelzklebstoff umfassend mehr als 50 L. Dazu wird der Schmelzklebstoff direkt im Vorratsbehälter, in dem der Schmelzklebstoff üblicherweise geliefert wird, aufgeschmolzen und kann einer Weiterverarbeitung wie einer Auftragung auf Oberflächen zugeführt werden. Eine Entnahme des Schmelzklebstoffes aus dem Vorratsbehälter nach der Lieferung und vor dem Aufschmelzen ist nicht erforderlich, was eine Handhabung der großen Gebinde erleichtert.

Bei dem Schmelzklebstoff (auch als Schmelzmasse bezeichnet) handelt es sich vorzugsweise um eine handelsübliche Reaktiv-Schmelzmasse, insbesondere auf Polyurethanbasis, welche vorzugsweise durch die Feuchtigkeit, beispielsweise aus der umgebenden Luft, reagiert und aushärtet. Vorzugsweise ist der Schmelzklebstoff wasser- und lösungsmittelfrei, welche mittlerweile im Rahmen der "HotCoating"-Technologie zur Veredelung von Oberflächen eingesetzt werden kann. Demzufolge kann der Schmelzklebstoff zur Verklebung aber auch zur Oberflächenbeschichtung eingesetzt werden. Beispielhafte Zusammensetzungen und Anwendungen sind in WO-A 2004/099333, WO-A 02/094549, WO-A 02/094457, WO-A 2006/056472, WO-A 2006/058739, WO-A 2006/066954, WO-A 2006/106143, WO-A 2007/107531, WO-A 2010/003959, WO-A 2012/084823, WO-A 2012/084805, WO-A 2016/174021 beschrieben.

Bei dem Schmelzklebstoff handelt es sich um ein bei Raumtemperatur festes heißflüssiges Produkt. Die Temperatur bei der der Schmelzklebstoff aufgetragen wird, liegt typischerweise in einem Bereich von 60°C bis 150°C, vorzugsweise von 100°C bis 140°C, wobei der Schmelzklebstoff bevorzugt eine Viskosität nach BROOKFIELD bei 120°C im Bereich von 1.000 mPas bis 30.000 mPas, mehr bevorzugt 4.000 mPas bis 10.000 mPas besitzt. Die Dichte des Schmelzklebstoffs liegt üblicherweise bei 1,1 g/m². Die Schicht aus Schmelzklebstoff kann je nach Auftragseinheit beispielsweise aufgerakelt, aufgewalzt, aufgesprüht oder mittels Düsen oder Schlitzdüsen, bzw. mittels Curtain-Coating oder durch Fibern (Fadenauftrag) aufgebracht werden. Dabei können pro Quadratmeter zu beschichtender Oberfläche etwa 20 g bis 1200 g, vorzugsweise 20 g bis 450 g, weiter bevorzugt 20 g bis 300 g, Schmelzklebstoff aufgetragen werden. Vorteilhaft weist der Schmelzklebstoff selbst im ausgehärteten Zustand eine gewisse Restelastizität auf. Vorzugsweise erfolgt die Aushärtung neben einer physikalischen Erstarrung zumindest teilweise -insbesondere ausschließlichdurch Feuchtigkeitshärtung mit Hilfe der Luftfeuchtigkeit.

Zur Erzielung gegebenenfalls geforderter Resistenzen kann der Schmelzklebstoff Additive, Hilfsstoffe und/oder Füllstoffe umfassen, wobei Partikel einer Füllstoffkomponente hinsichtlich Material, Partikelgröße, -form und -gewicht in einem weiten Bereich variiert werden können. Durch eine gute Einbindung der Partikel der Füllstoffkomponente in den Schmelzklebstoff mit hoher Viskosität und spezieller Rheologie verbleiben auch bei einer höheren Verarbeitungstemperatur die Partikel weitgehend gleichmäßig verteilt, so dass keine zusätzliche Vermischung notwendig ist.

Die Füllstoffkomponente kann beispielsweise ein Metalloxid, Siliziumdioxid, Metallcarbid, Siliciumcarbid, Metallnitrid, Siliciumnitrid oder Bornitrid sein. Geeignete Materialien sind Korund, Schmirgel, ein Spinell und/oder Zirkonoxid.

Die Füllstoffkomponente weist vorzugsweise einen Anteil im Bereich von 5 Gew.- % bis 60 Gew.-% bezogen auf das Gesamtgewicht des Schmelzklebstoffs auf. Weiter bevorzugt liegt der Anteil im Bereich von 10 Gew.-% bis 50 Gew.-%, weiter mehr bevorzugt im Bereich von 15 Gew.-% bis 30 Gew.-%.

Das erfindungsgemäße Aufschmelzen des Schmelzklebstoffes ist dem Abschmelzprinzip zuzuordnen, wobei der in unaufgeschmolzener Form vorliegende Schmelzklebstoff gegen die Heizplatte gedrückt wird, so dass der Schmelzklebstoff aufschmilzt. Die erfindungsgemäße Vorrichtung zum Aufschmelzen kann auch als Vorschmelzer bezeichnet werden.

Unter der Heizplatte, die auch als beheizbare Schmelzwand bezeichnet werden kann, wird ein flächiges Element, bevorzugt gefertigt aus Metall, insbesondere aus Aluminium, Kupfer oder Messing, verstanden, das eine Plattentemperatur aufweist, die größer ist als Umgebungstemperatur. Die Plattentemperatur beträgt insbesondere mehr als 80°C, bevorzugt mehr als 100°C und mehr bevorzugt mehr als 130°C. Weiterhin beträgt die Plattentemperatur üblicherweise weniger als 250°C, bevorzugt weniger als 200°C. Bevorzugt beträgt die Plattentemperatur 130°C bis 200°C, mehr bevorzugt 145°C bis 185°C.

Bevorzugt wird in Schritt c) der Schmelzklebstoff an der Heizplatte auf eine Klebstofftemperatur von mehr als 70°C erwärmt, mehr bevorzugt auf eine Klebstofftemperatur von mehr als 90°C und insbesondere auf eine Klebstofftemperatur zwischen 100°C und 130°C. Insbesondere weist der aufgeschmolzene Schmelzklebstoff die Klebstofftemperatur bei Austritt aus der Vorrichtung zum Aufschmelzen auf.

Die Heizplatte weist eine V-förmige Oberflächenstruktur, insbesondere an einer Oberfläche, die dem Schmelzklebstoff zugewandt ist, auf, wobei die V-förmige Oberflächenstruktur einen Ablauf für aufgeschmolzenen Schmelzklebstoff bildet. Die Heizplatte weist Rillen auf, die die V-förmige Oberflächenstruktur bilden. Die Rillen sind bevorzugt in zwei Gruppen in jeweils parallelen Linien angeordnet, wobei sich die Linien der zwei Gruppen mehr bevorzugt an einer Spiegelachse der Heizplatte treffen, wodurch die V-förmige Oberflächenstruktur entsteht. Bevorzugt liegen zwischen parallelen Linien der Rillen Kanäle vor. Weiterhin weisen die Rillen eine Breite und/oder Tiefe in einem Bereich von 2 mm bis 15 mm auf, insbesondere von 3 mm bis 7 mm, zum Beispiel 5 mm. Die Kanäle weisen vorteilhaft eine Breite und/oder Tiefe in einem Bereich von 2 mm bis 15 mm auf, insbesondere von 10 mm bis 15 mm, zum Beispiel 12 mm. Der aufgeschmolzene Schmelzklebstoff kann in den Kanälen und entlang der Rillen zum Tiefpunkt der V-förmigen Struktur abfließen. Zwei sich treffende Linien, jeweils einer der beiden Gruppen, schließen bevorzugt einen Winkel γ von 30° bis 70° ein.

Bevorzugt schließen die Stempelstirnfläche und die Heizplatte mit einer horizontalen Ebene einen Winkel α von mehr als 30°, mehr bevorzugt von mehr als 45°, besonders bevorzugt von mehr als 60°, insbesondere bevorzugt von mehr als 80°, zum Beispiel 90° ein. Sowohl die Stempelstirnfläche als auch die Heizplatte, insbesondere die Oberfläche der Heizplatte, die dem Schmelzklebstoff zugewandt ist, sind bevorzugt im Wesentlichen vertikal angeordnet, wobei die Stempelstirnfläche und die Heizplatte gegenüber der horizontalen Ebene auch geneigt angeordnet sein können, aber bevorzugt nicht horizontal angeordnet sind.

Vorteilhaft entspricht die Ausrichtung der Stempelstirnfläche und der Heizplatte der Ausrichtung der zwei gegenüberliegenden Seitenflächen des Vorratsbehälters. Der Stempel kann auch als Kolben bezeichnet werden, wobei in der Vorrichtung zum Aufschmelzen die Stempelstirnfläche bevorzugt zum Schmelzklebstoff gerichtet ist und den Schmelzklebstoff gegebenenfalls berührt. Der Stempel kann einen Vollzylinder darstellen oder aus mindestens zwei zylinderförmigen Elementen zusammengesetzt sein, die einen unterschiedlichen Durchmesser besitzen. Ferner ist der Stempel bevorzugt beweglich an der Vorrichtung zum Aufschmelzen und besonders bevorzugt beweglich in dem in der Vorrichtung zum Aufschmelzen angeordneten Vorratsbehälter angeordnet, so dass der Schmelzklebstoff mit dem Stempel aus dem Vorratsbehälter heraus bzw. in Richtung der Heizplatte gedrückt werden kann. Besonders bevorzugt ist der Stempel ein verschiebbar gelagerter, kraftbetriebener Förderkolben.

Die Halterung zur Aufnahme des Vorratsbehälters ist bevorzugt unbeweglich an der Vorrichtung zum Aufschmelzen befestigt, so dass der Vorratsbehälter auf die Halterung aufgelegt werden kann und durch die Halterung in eine gegebenenfalls feste Position gebracht werden kann. Bevorzugt umfasst die Halterung mindestens eine Halbschale, in der der Vorratsbehälter angeordnet ist. Die mindestens eine Halbschale ist vorteilhaft aus Metall gefertigt. Abstände von mehr als einer Halbschale, die bevorzugt parallel angeordnet sind, sind bevorzugt an übliche Kräne und/oder Gabelstapler angepasst.

Als Vorratsbehälter wird ein Behälter bezeichnet, in dem der Schmelzklebstoff gelagert, transportiert und/oder geliefert wird, und der insbesondere nicht fester Bestandteil der Vorrichtung zum Aufschmelzen ist. Der Vorratsbehälter kann auch als Fass bezeichnet werden. Der Vorratsbehälter kann mit geöffneten zwei gegenüberliegenden Seitenflächen in der Vorrichtung angeordnet werden oder die zwei gegenüberliegenden Seitenflächen können in der Vorrichtung geöffnet werden, so dass bevorzugt die erste der zwei gegenüberliegenden Seitenflächen offen an der Heizplatte angeordnet ist und eine zweite der zwei gegenüberliegenden Seitenflächen offen an der Stempelstirnfläche angeordnet ist. Der Stempel dringt durch die zweite der zwei gegenüberliegenden Seitenflächen bevorzugt in den Vorratsbehälter ein und übt den Pressdruck auf den Schmelzklebstoff aus. Der Pressdruck kann je nach Anwendung variieren und kann in einem breiten Bereich angewendet werden. Beispielsweise kann der Pressdruck 6 bar und mehr betragen. Vorteilhaft für die Steigerung der Schmelzleistung sind auch erhöhte Pressdrücke, wie beispielsweise mehr als 7 bar, mehr als 8 bar, aber üblicherweise weniger als 15 bar. Beispielsweise beträgt dann der Pressdruck 8,5 bar bis 9,5 bar, wie etwa 9 bar. Mit dem Aufschmelzen des Schmelzklebstoffes wird der im unaufgeschmolzenen Zustand verbleibende Teil des Schmelzklebstoffes durch den Stempel im Vorratsbehälter hin zur Heizplatte bewegt und ebenfalls aufgeschmolzen. Der aufgeschmolzene Schmelzklebstoff fließt an der Heizplatte ab und aus dem Vorratsbehälter heraus und kann einer anschließenden Weiterverarbeitung zugeführt werden.

Der Vorratsbehälter weist die starre Mantelwand entlang einer Mantelfläche des Vorratsbehälters auf, wobei starr so zu verstehen ist, dass die Mantelwand von sich aus formstabil ist, insbesondere auch bei stehender Anordnung des Vorratsbehälters in leerem Zustand. Das innere Volumen des Vorratsbehälters ist bevorzugt durch die starre Mantelwand und die zwei gegenüberliegenden Seitenflächen begrenzt.

Das innere Volumen des Vorratsbehälters beträgt bevorzugt mehr als 80 L, mehr bevorzugt mehr als 150 L und insbesondere bevorzugt 180 L bis 220 L, beispielsweise 200 L. Üblicherweise beträgt das innere Volumen des Vorratsbehälters nicht mehr als 300 L.

Bevorzugt werden in Schritt c) des erfindungsgemäßen Verfahrens mehr als 50 kg des Schmelzklebstoffs pro Stunde aufgeschmolzen, mehr bevorzugt mehr als 80 kg pro Stunde und insbesondere bevorzugt 100 kg bis 160 kg pro Stunde.

Bevorzugt weist der Vorratsbehälter eine zylindrische Form auf, die durch die starre Mantelwand und die zwei gegenüberliegenden Seitenflächen begrenzt wird.

Ferner kann der Vorratsbehälter zwei gegenüberliegende Seitenwände umfassen, die spätestens vor Schritt c) entfernt werden, so dass die zwei gegenüberliegenden Seitenflächen des Vorratsbehälters offen sind. Die zwei gegenüberliegenden Seitenwände des Vorratsbehälters können Deckel sein, die entfernt werden, bevor der Stempel den Schmelzklebstoff durch den Vorratsbehälter an die Heizplatte drückt.

Vorteilhaft sind die starre Mantelwand und/oder die zwei gegenüberliegenden Seitenwände des Vorratsbehälters aus Stahl, Kunststoff oder Holzfasern gefertigt. Bevorzugt wird in Schritt b) des erfindungsgemäßen Verfahrens die starre Mantelwand des Vorratsbehälters an der ersten der zwei gegenüberliegenden Seitenflächen dichtend an der Heizplatte angeordnet. Bevorzugt weist die Heizplatte eine Dichtung auf, die auch als Anschlag bezeichnet werden kann. Insbesondere stellte die Dichtung einen äußeren Rand der Heizplatte dar. Mehr bevorzugt wird in Schritt b) des erfindungsgemäßen Verfahrens die starre Mantelwand des Vorratsbehälters an der ersten der zwei gegenüberliegenden Seitenflächen dichtend an der Dichtung angeordnet und insbesondere an die Dichtung gepresst. Dazu kann die Vorrichtung mindestens einen weiteren Stempel aufweisen, der die starre Mantelwand des Vorratsbehälters an die Heizplatte presst. Bevorzugt wird der Vorratsbehälter durch den mindestens einen weiteren Stempel in die feste Position gebracht. Alternativ ist auch eine andere dichtende Verbindung wie eine Schraubverbindung oder eine Klemmung, zum Beispiel mittels Kniehebel, denkbar. Die Bewegungsrichtung des mindestens einen weiteren Stempels entspricht bevorzugt der Bewegungsrichtung des Stempels, der den Schmelzklebstoff presst.

Ferner kann die Vorrichtung zum Aufschmelzen einen Rohrstutzen aufweisen, an dem eine Absaugung zum Entfernen von Prozessgasen angeschlossen werden kann. Der Rohrstutzen ist bevorzugt oberhalb der Heizplatte angeordnet.

Bevorzugt weist der Vorratsbehälter eine Längsachse auf, die die zwei gegenüberliegenden Seitenflächen schneidet und in Schritt b) wird bevorzugt der Vorratsbehälter, mehr bevorzugt die Vorrichtung zum Aufschmelzen zusammen mit dem Vorratsbehälter, so in der Vorrichtung zum Aufschmelzen angeordnet, dass die Längsachse des Vorratsbehälters mit einer horizontalen Ebene einen Winkel β von weniger als 80° einschließt. Mehr bevorzugt beträgt der Winkel β 0° bis 45°C, besonders bevorzugt 5° bis 30°C. Der Winkel β beträgt in einer bevorzugten Ausführungsform 0°. Entsprechend ist der Vorratsbehälter bevorzugt im Wesentlichen horizontal angeordnet.

Beträgt der Winkel β mehr 0°, so ist dies vorteilhaft, da Restmengen an Schmelzklebstoff durch die Neigung entlang der starren Mantelwand ablaufen können.

Weiterhin bevorzugt ist in dem Vorratsbehälter eine flexible Hülle, die auch als Ummantelung bezeichnet werden kann, angeordnet, in der besonders bevorzugt der Schmelzklebstoff aufgenommen ist. Durch die flexible Hülle wird eine Kontamination des Vorratsbehälters und/oder des Stempels mit Schmelzklebstoff, insbesondere mit aufgeschmolzenem Schmelzklebstoff, vermieden. Ebenso wird durch die flexible Hülle ein Rückschlag von Schmelzklebstoff, insbesondere von aufgeschmolzenem Schmelzklebstoff, während des Verfahrens verhindert. Wenn der Vorratsbehälter in der Vorrichtung zum Aufschmelzen angeordnet ist, weist die flexible Hülle mindestens an einer Seite der flexiblen Hülle eine Öffnung auf, so dass der Schmelzklebstoff mit der Heizplatte in Kontakt gebracht werden kann und aus der flexiblen Hülle sowie aus dem Vorratsbehälter entfernt werden kann. Bevorzugt ist die Seite der flexiblen Hülle an der ersten der zwei gegenüberliegenden Seitenflächen des Vorratsbehälters angeordnet, die an der Heizplatte angeordnet ist.

Bevorzugt ist zwischen der Stempelstirnfläche und dem Schmelzklebstoff die flexible Hülle angeordnet, so dass die Stempelstirnfläche den Schmelzklebstoff nicht direkt berührt. Während des Förderns des Schmelzklebstoffs in Richtung der Heizplatte wird die flexible Hülle bevorzugt durch die Bewegung des Stempels gefaltet.

Die flexible Hülle weist ferner bevorzugt ein Hüllenmaterial auf, das Aluminium enthält, insbesondere bevorzugt ist die flexible Hülle ein Aluverbund-Beutel.

Insbesondere kann die flexible Hülle in Form eines Rundbodenbeutels vorliegen, wobei das Hüllenmaterial vorteilhaft eine Verbundfolie umfassend eine Metalllage aus einer Leichtmetallfolie, insbesondere eine Aluminiumfolie, umfasst. Ferner kann die Verbundfolie eine Kunststofflage aus Polypropylen oder Polyethylenterephthalat als innere Schicht umfassen und die Verbundfolie weist bevorzugt eine Gesamtdicke von 0,05 bis 0,15 mm auf.

Bevorzugt ist der Schmelzklebstoff in dem Vorratsbehälter in der flexiblen Hülle angeordnet und die flexible Hülle wird mindestens an der ersten der zwei gegenüberliegenden Seitenflächen vor Schritt b) geöffnet, wobei beim Öffnen bevorzugt ein Teil der flexiblen Hülle an der starren Mantelwand umgeschlagen wird.

Weiterhin wird eine Beschichtungsvorrichtung vorgeschlagen, die eine Auftragseinheit und eine erfindungsgemäße Vorrichtung zum Aufschmelzen umfasst.

Bevorzugt ist die Vorrichtung zum Aufschmelzen auf der Auftragseinheit angeordnet und der aufgeschmolzene Klebstoff fließt mittels Schwerkraft und durch den Pressdruck in die Auftragseinheit oder die Vorrichtung zum Aufschmelzen weist eine Pumpe auf und der aufgeschmolzene Schmelzklebstoff wird mittels der Pumpe zu der Auftragseinheit gefördert, wobei die Auftragseinheit bevorzugt einen Schlauch und eine Schlitzdüse umfasst. Der Schlauch ist bevorzugt beheizbar.

In dem Fall, in dem die Vorrichtung zum Aufschmelzen auf der Auftragseinheit angeordnet ist, ist die Auftragseinheit bevorzugt ein Walzenauftragsystem. Das Walzenauftragsystem umfasst bevorzugt Auftragswalzen und/oder Glättwalzen. Hier ist weder eine Pumpe noch ein Schlauch erforderlich, wobei ein Verschleiß von Pumpen sowie eine Störquelle durch beispielsweise Verstopfen des Schlauches vermieden werden.

### Kurze Beschreibung der Zeichnungen

Erfindungsgemäße Ausführungsformen sind in den Zeichnungen dargestellt und werden in der nachfolgenden Beschreibung näher erläutert.

Es zeigen:
- Figur 1: eine erfindungsgemäße Vorrichtung zum Aufschmelzen eines Schmelzklebstoffes (V-förmige Oberflächenstruktur der Heizplatte mit Ablauf nicht dargestellt),
- Figur 2: eine Draufsicht auf eine erfindungsgemäße Vorrichtung zum Aufschmelzen eines Schmelzklebstoffes (V-förmige Oberflächenstruktur der Heizplatte mit Ablauf nicht dargestellt),
- Figur 3: einen Vorratsbehälter,
- Figur 4: einen geöffneten Vorratsbehälter,
- Figur 5: eine Beschichtungsvorrichtung umfassend eine erfindungsgemäße Vorrichtung zum Aufschmelzen (V-förmige Oberflächenstruktur der Heizplatte nicht dargestellt),
- Figur 6: eine Beschichtungsvorrichtung umfassend eine weitere Ausführungsform einer erfindungsgemäßen Vorrichtung zum Aufschmelzen (V-förmige Oberflächenstruktur der Heizplatte nicht dargestellt),
- Figur 7: eine Beschichtungsvorrichtung umfassend eine erfindungsgemäße Vorrichtung zum Aufschmelzen und eine weitere Ausführungsform einer Auftragseinheit (V-förmige Oberflächenstruktur der Heizplatte nicht dargestellt) und
- Figur 8: eine Heizplatte einer erfindungsgemäßen Vorrichtung zum Aufschmelzen.

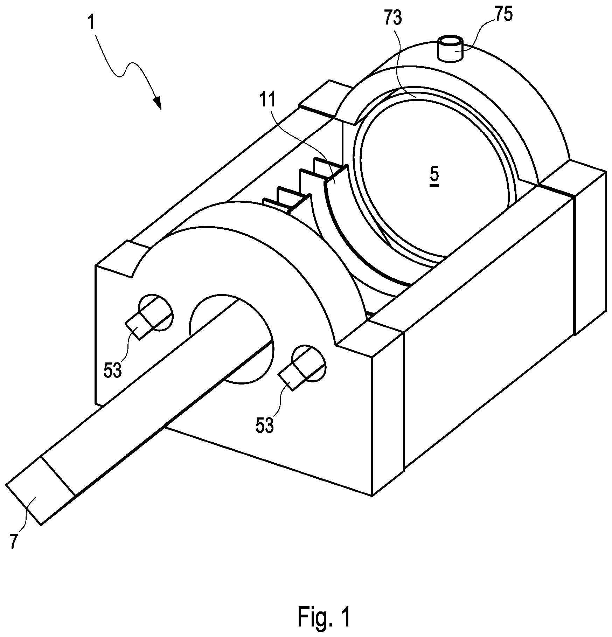

Figur 1 zeigt eine erfindungsgemäße Vorrichtung 1 zum Aufschmelzen umfassend eine Heizplatte 5 mit einer Dichtung 73, einen Stempel 7 und eine Halterung 11. Neben dem Stempel 7 sind zwei weitere Stempel 53 vorgesehen. Die Heizplatte 5 und der Stempel 7 sind mit Abstand voneinander und gegenüberliegend angeordnet, wobei sich die Halterung 11 zumindest teilweise zwischen der Heizplatte 5 und dem Stempel 7 befindet. Oberhalb der Heizplatte 5 weist die Vorrichtung 1 zum Aufschmelzen einen Rohrstutzen 75 auf, an den eine Absaugung angeschlossen werden kann.

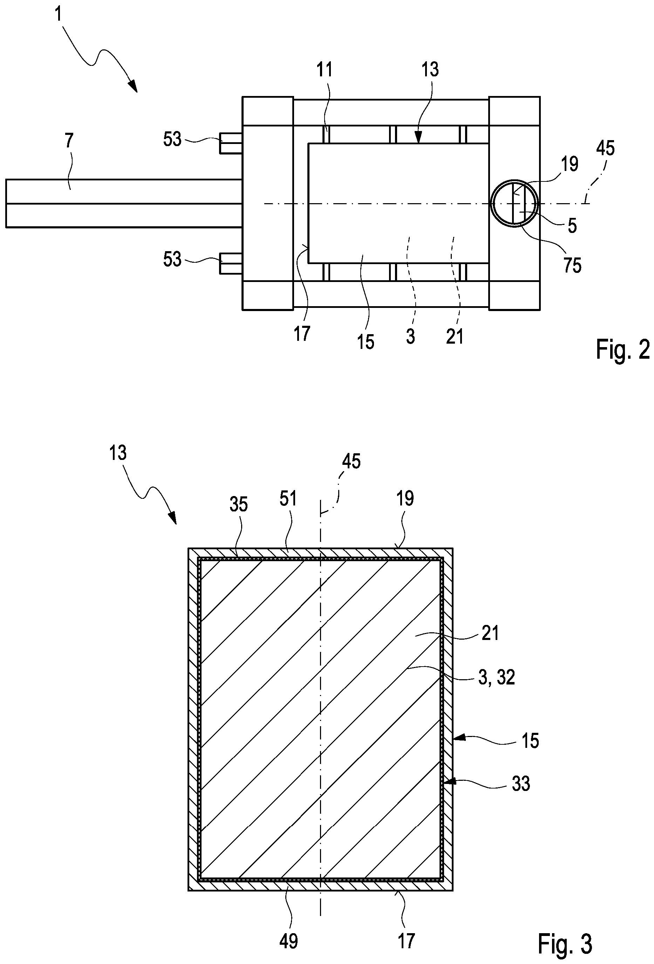

Figur 2 zeigt eine Draufsicht auf eine erfindungsgemäße Vorrichtung 1 zum Aufschmelzen eines Schmelzklebstoffes 3. Die Vorrichtung 1 zum Aufschmelzen umfasst eine Heizplatte 5, einen Stempel 7, eine Halterung 11, und einen Vorratsbehälter 13. Ferner ist oberhalb der Heizplatte 5 ein Rohrstutzen 75 angeordnet. Der Vorratsbehälter 13 weist ein inneres Volumen 21 auf, das von einer starren Mantelwand 15 und zwei gegenüberliegenden Seitenflächen 17, 19 begrenzt wird. Ferner besitzt der Vorratsbehälter 13 eine Längsachse 45, die eine erste der zwei gegenüberliegenden Seitenflächen 19 und eine zweite der zwei gegenüberliegenden Seitenflächen 17 schneidet. Durch den Rohrstutzen 75 ist von der Heizplatte 5 und der ersten der zwei Seitenfläche 19 in dieser Darstellung jeweils nur ein Ausschnitt sichtbar.

Der Vorratsbehälter 13 enthält den Schmelzklebstoff 3 und ist in der Halterung 11 aufgenommen. Die Halterung 11 hält den Vorratsbehälter 13, insbesondere die starre Mantelwand 15, in einer festen Position. Die feste Position der starren Mantelwand 15 kann mit weiteren Stempeln 53 unterstützt werden. Ferner ist der Vorratsbehälter 13 in der Halterung 11 zumindest teilweise zwischen dem Stempel 7 und der Heizplatte 5 angeordnet.

Figur 3 zeigt einen Vorratsbehälter 13, der in einer erfindungsgemäßen Vorrichtung 1 zum Aufschmelzen angeordnet wird. Der Vorratsbehälter 13 besitzt ein inneres Volumen 21, das von einer starren Mantelwand 15 und zwei gegenüberliegenden Seitenflächen 17, 19 begrenzt wird. An den zwei gegenüberliegenden Seitenflächen 17, 19 befinden sich zunächst zwei gegenüberliegende Seitenwände 49, 51, die zur Durchführung des erfindungsgemäßen Verfahrens entfernt werden, so dass die zwei gegenüberliegenden Seitenflächen 17, 19 offen vorliegen.

In dem inneren Volumen 21 des Vorratsbehälters 13 ist der Schmelzklebstoff 3 in ungeschmolzener Form 32 angeordnet. In der hier dargestellten Ausführungsform ist der Schmelzklebstoff 7 von einer flexiblen Hülle 33 in dem Vorratsbehälter 13 umgeben. Ferner weist der Vorratsbehälter 13, der hier eine Zylinderform besitzt, eine Längsachse 45 auf, die zur starren Mantelwand 15 parallel ist und die zwei gegenüberliegenden Seitenflächen 17, 19 orthogonal schneidet.

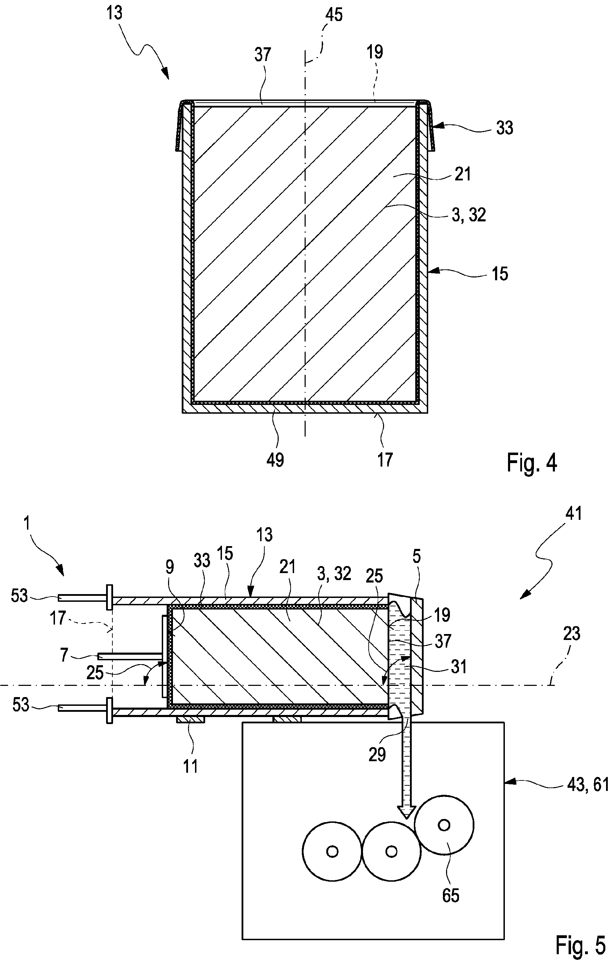

Figur 4 zeigt einen geöffneten Vorratsbehälter 13, der sich von dem Vorratsbehälter 13 gemäß Figur 3 darin unterscheidet, dass die Seitenwand 51 bereits an der ersten der ersten der zwei gegenüberliegenden Seitenflächen 19 entfernt wurde. Weiterhin wurde die flexible Hülle 33 an einer Seite 35 der flexiblen Hülle 33 geöffnet, so dass eine Öffnung 37 entstanden ist. Ein Teil der flexiblen Hülle 33, der die Öffnung 37 verschlossen hatte, ist um die starre Mantelwand 15 nach außen umgeschlagen worden, so dass der Schmelzklebstoff 3 an der ersten der zwei gegenüberliegenden Seitenflächen 19 des Vorratsbehälters 13 frei liegt.

Figur 5 zeigt eine Beschichtungsvorrichtung 41 umfassend eine Auftragseinheit 43 und eine erfindungsgemäße Vorrichtung 1 zum Aufschmelzen. Als Auftragseinheit 43 ist eine erste Auftragseinheit 61 dargestellt, die Walzen 65 umfasst.

Die Vorrichtung 1 zum Aufschmelzen ist so angeordnet, dass die Stempelstirnfläche 9 des Stempels 7 und auch die Heizplatte 5 mit einer horizontalen Ebene 23 einen Winkel α 25 von 90° einschließen. Entsprechend ist der Vorratsbehälter 13 mit der starren Mantelwand 15 horizontal angeordnet.

Der Schmelzklebstoff 3 in unaufgeschmolzener Form 32 wird an der Heizplatte 5 aufgeschmolzen, so dass aufgeschmolzener Klebstoff 31 vorliegt, der durch einen Ablauf 29 direkt von oben mittels der Schwerkraft und durch den Pressdruck in die Auftragseinheit 43 fließt.

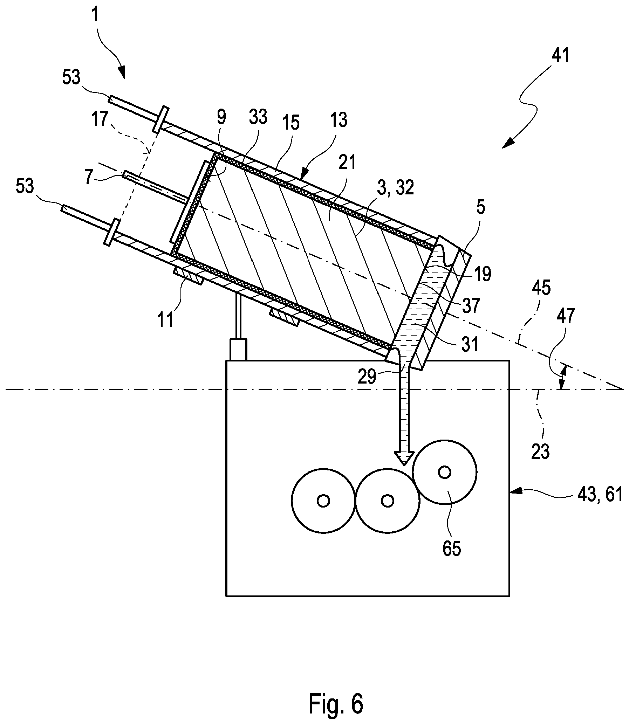

Figur 6 zeigt eine Beschichtungseinheit 41, die im Wesentlichen der Beschichtungseinheit 41 gemäß Figur 5 entspricht, mit dem Unterschied, dass hier der Vorratsbehälter 13 in der erfindungsgemäßen Vorrichtung 1 um einen Winkel β 47 geneigt auf der Auftragsvorrichtung 43 angeordnet ist. Der Winkel β 47 wird von einer horizontalen Ebene 23 und der Längsachse 45 des Vorratsbehälters 13 eingeschlossen und beträgt in der dargestellten Ausführungsform weniger als 45°.

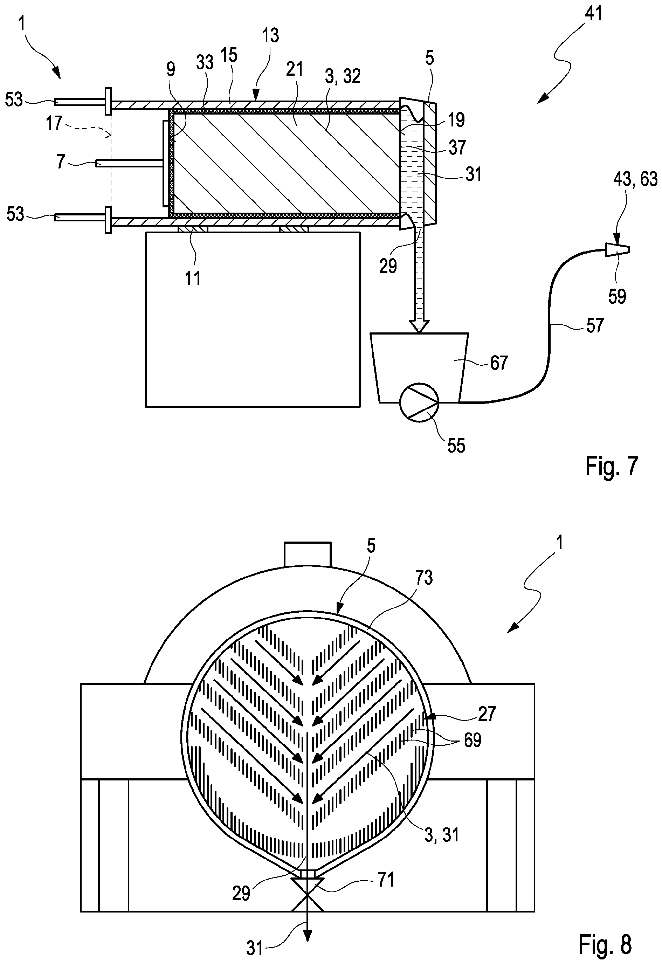

Figur 7 zeigt eine Beschichtungsvorrichtung 41 mit einer erfindungsgemäßen Vorrichtung 1 zum Aufschmelzen und eine Auftragseinheit 43. Als Auftragseinheit 43 ist eine zweite Auftragseinheit 63, die einen Schlauch 57, der beheizbar ist, und eine Schlitzdüse 59 umfasst.

Die Vorrichtung 1 zum Aufschmelzen umfasst in dieser Ausführungsform eine Pumpe 55, die in einem Auffangbehälter 67 angeordnet ist. Aus dem Auffangbehälter 67 wird der aufgeschmolzene Schmelzklebstoff 31 mittels der Pumpe 55 durch den Schlauch 57 zur Schlitzdüse 59 gefördert und kann von der Schlitzdüse 59 auf Oberflächen aufgetragen werden.

Figur 8 zeigt eine Heizplatte 5, die eine V-förmige Oberflächenstruktur 27 aufweist. Die V-förmige Oberflächenstruktur 27 wird durch Rippen 69 gebildet. Der aufgeschmolzene Schmelzklebstoff 31 fließt entlang der V-förmigen Oberflächenstruktur 27 zu einem Ablauf 29 und verlässt die Heizplatte 5 durch ein Ventil 71. Ventil 71 reguliert den Zufluss der Schmelzmasse in die Auftragseinheit oder den Speicher (nicht dargestellt). Weiterhin weist die Heizplatte 5 eine Dichtung 73 als äußeren Rand auf.

### Beispiel

200 L eines Schmelzklebstoffs der Marke Kleiberit^{®} HotCoatings 717.6 (ein mit Feuchtigkeit des zu verklebenden Materiales oder der Umgebung, wie z. B. der Luft reagierender PUR Schmelzklebstoff, d. h. es findet nicht nur ein physikalischer Effekt durch Erstarrung des flüssigen Klebstoffes statt, sondern zusätzlich ein chemisch reaktiver Effekt) werden in einem zylinderförmigen Vorratsbehälter vorgelegt. In dem Vorratsbehälter ist der Schmelzklebstoff zusätzlich in einem Aluverbund-Beutel angeordnet.

Der Vorratsbehälter wird in eine waagerechte Position gebracht und geöffnet, indem zwei gegenüberliegende Seitenwände des Vorratsbehälters entfernt werden. Der Schmelzklebstoff verbleibt in einer starren Mantelwand des Vorratsbehälters und der Aluverbund-Beutel wird dort, wo eine Seitenwand entfernt wurde, geöffnet, so dass der Schmelzklebstoff an einer Seitenfläche des Vorratsbehälters freiliegt.

Dann wird der Vorratsbehälter, ebenfalls in einer waagerechten Position, in einer erfindungsgemäßen Vorrichtung angeordnet. Die erfindungsgemäße Vorrichtung besitzt eine Heizplatte und einen Stempel, zwischen denen der Vorratsbehälter so angeordnet wird, dass der freiliegende Schmelzklebstoff zur Heizplatte gerichtet ist.

Die Heizplatte weist eine Plattentemperatur von 150 °C auf, der Stempel erzeugt einen Pressdruck von 6 bar und es werden ca. 90 kg Schmelzklebstoff pro Stunde aufgeschmolzen.

Die aufgeschmolzene Schmelzmasse fließt über ein beheiztes Rinnensystem in eine Auftragseinheit, auf der die Vorrichtung zum Aufschmelzen angeordnet ist. Die Auftragseinheit besitzt drei Walzen.

Zwischen der beheizten Dosierwalze aus Metall und der silikonbeschichteten Auftragswalze sammelt sich die Schmelzmasse und wird dann im Gleichlauf von der Auftragswalze auf das Substrat übertragen. Die direkt nachgeschaltet, beheizte Glättwalze im Gegenlauf glättet die Oberfläche der aufgetragenen Schmelzmasse die als Beschichtung von Fußbodenelementen dient.

### Bezugszeichenliste

- 1: Vorrichtung
- 3: Schmelzklebstoff
- 5: Heizplatte
- 7: Stempel
- 9: Stempelstirnfläche
- 11: Halterung
- 13: Vorratsbehälter
- 15: Starre Mantelwand
- 17: zweite der zwei gegenüberliegenden Seitenflächen
- 19: erste der zwei gegenüberliegenden Seitenflächen
- 21: inneres Volumen
- 23: horizontale Ebene
- 25: Winkel α
- 27: Oberflächenstruktur
- 29: Ablauf
- 31: Aufgeschmolzener Schmelzklebstoff
- 32: Schmelzklebstoff in ungeschmolzener Form
- 33: Flexible Hülle
- 35: Seite der flexiblen Hülle 33
- 37: Öffnung
- 41: Beschichtungsvorrichtung
- 43: Auftragseinheit
- 45: Längsachse
- 47: Winkel β
- 49,: 51 Gegenüberliegende Seitenwände
- 53: Weiterer Stempel
- 55: Pumpe
- 57: Schlauch
- 59: Schlitzdüse
- 61: erste Auftragseinheit
- 63: zweite Auftragseinheit
- 65: Walzen
- 67: Auffangbehälter
- 69: Rippen
- 71: Ventil
- 73: Dichtung
- 75: Rohrstutzen

## Patentansprüche

1. Vorrichtung (1) zum Aufschmelzen eines Schmelzklebstoffs (3) umfassend eine Heizplatte (5), einen Stempel (7), der Stempel (7) umfassend eine Stempelstirnfläche (9), eine Halterung (11) und einen Vorratsbehälter (13) mit einem inneren Volumen (21) von mehr als 50 L, wobei der Vorratsbehälter (13) eine starre Mantelwand (15) und zwei gegenüberliegende Seitenflächen (17, 19) aufweist und den Schmelzklebstoff (3) enthält, die Stempelstirnfläche (9) und die Heizplatte (5) gegenüberliegend angeordnet sind und der Vorratsbehälter (13) so in der Halterung (11) aufgenommen ist, dass der Schmelzklebstoff (3) zwischen dem Stempel (7) und der Heizplatte (5) angeordnet ist, wobei, der Vorratsbehälter (13) aus der Vorrichtung entnehmbar ist, **dadurch gekennzeichnet, dass** die Heizplatte (5) eine V-förmige Oberflächenstruktur (27) aufweist, die durch Rippen (69) gebildet wird und wobei die V-förmige Oberflächenstruktur (27) einen Ablauf (29) für aufgeschmolzenen Schmelzklebstoff (31) bildet.

2. Vorrichtung nach Anspruch 1, **dadurch gekennzeichnet, dass** die Stempelstirnfläche (9) und die Heizplatte (5) mit einer horizontalen Ebene (23) einen Winkel α (25) von mehr als 30° einschließen.

3. Vorrichtung nach Anspruch 1 oder 2, **dadurch gekennzeichnet, dass** der Vorratsbehälter (13) eine zylindrische Form aufweist.

4. Vorrichtung nach einem der Ansprüche 1 bis 3, **dadurch gekennzeichnet, dass** die starre Mantelwand (15) des Vorratsbehälters (13) aus Stahl, Kunststoff oder Holzfasern gefertigt ist.

5. Vorrichtung nach einem der Ansprüche 1 bis 4, **dadurch gekennzeichnet, dass** in dem Vorratsbehälter (13) eine flexible Hülle (33) angeordnet ist, die mindestens an einer Seite (35) der flexiblen Hülle (33) eine Öffnung (37) aufweist und die flexible Hülle (33) bevorzugt ein Hüllenmaterial enthaltend Aluminium aufweist.

6. Beschichtungsvorrichtung (41) umfassend eine Auftragseinheit (43) und eine Vorrichtung (1) zum Aufschmelzen nach einem der Ansprüche 1 bis 5, wobei die Vorrichtung (1) zum Aufschmelzen auf der Auftragseinheit (43) angeordnet ist.

7. Verfahren zum Aufschmelzen eines Schmelzklebstoffs (3) umfassend die folgenden Schritte:
a) Bereitstellen des Schmelzklebstoffs (3) in einem Vorratsbehälter (13) mit einem inneren Volumen (21) von mehr als 50 L, wobei der Vorratsbehälter (13) eine starre Mantelwand (15) und zwei gegenüberliegende Seitenflächen (17, 19) aufweist,
b) Anordnen des Vorratsbehälter (13), enthaltend den Schmelzklebstoff (3) in ungeschmolzener Form (32), in einer Vorrichtung (1) zum Aufschmelzen nach einem der Ansprüche 1 bis 5, umfassend eine Heizplatte (5), so dass eine erste der zwei gegenüberliegenden Seitenflächen (19) an der Heizplatte (5) angeordnet ist,
c) Fördern des Schmelzklebstoffs (3) relativ zum Vorratsbehälter (13) und in Richtung der Heizplatte (5), wobei die zwei gegenüberliegenden Seitenflächen (17, 19) des Vorratsbehälters (13) offen sind, so dass der Schmelzklebstoff (3) mit der Heizplatte (5) in Kontakt gebracht wird und aufgeschmolzener Schmelzklebstoff (31) entsteht, der an der Heizplatte (5) abfließt, wobei die Vorrichtung (1) zum Aufschmelzen einen Stempel (7), der Stempel (7) umfassend eine Stempelstirnfläche (9), aufweist und der Schmelzklebstoff (3) mittels des Stempels (7) bei einem Pressdruck an die Heizplatte (5) gepresst wird und der Pressdruck bevorzugt 6 bar und mehr beträgt.

8. Verfahren nach Anspruch 7, **dadurch gekennzeichnet, dass** der Vorratsbehälter (13) eine Längsachse (45) aufweist, die die zwei gegenüberliegenden Seitenflächen (17, 19) schneidet und in Schritt b) der Vorratsbehälter (13) so in der Vorrichtung (1) zum Aufschmelzen angeordnet wird, dass die Längsachse (45) des Vorratsbehälters (13) mit einer horizontalen Ebene (23) einen Winkel β (47) von weniger als 80° einschließt, wobei der Winkel β (47) bevorzugt 0° bis 45° beträgt.

9. Verfahren nach Anspruch 7 oder 8, **dadurch gekennzeichnet, dass** der Vorratsbehälter (13) zwei gegenüberliegende Seitenwände (49, 51) umfasst, die spätestens vor Schritt c) entfernt werden, so dass die zwei gegenüberliegenden Seitenflächen (17, 19) des Vorratsbehälters (13) offen sind.

10. Verfahren nach einem der Ansprüche 7 bis 9, **dadurch gekennzeichnet, dass** der Schmelzklebstoff (3) in dem Vorratsbehälter (13) in einer flexiblen Hülle (33) angeordnet ist und die flexible Hülle (33) mindestens an der ersten der zwei gegenüberliegenden Seitenflächen (19), die in Schritt b) an der Heizplatte (5) angeordnet wird, vor Schritt b) geöffnet wird, wobei beim Öffnen bevorzugt ein Teil der flexiblen Hülle (33) an der starren Mantelwand (15) umgeschlagen wird.

11. Verfahren nach einem der Ansprüche 7 bis 10, **dadurch gekennzeichnet, dass** in Schritt b) die starre Mantelwand (15) des Vorratsbehälters (13) an der ersten der zwei gegenüberliegenden Seitenflächen (19) dichtend an der Heizplatte (5) angeordnet wird.

12. Verfahren nach Anspruch 11, **dadurch gekennzeichnet, dass** die Vorrichtung (1) mindestens einen weiteren Stempel (53) aufweist, der die starre Mantelwand (15) des Vorratsbehälters (13) zur dichtenden Anordnung an die Heizplatte (5) presst.

13. Verfahren nach einem der Ansprüche 7 bis 12, **dadurch gekennzeichnet, dass** in Schritt c) der Schmelzklebstoff (3) an der Heizplatte (5) auf eine Klebstofftemperatur von mehr als 70°C erwärmt wird.

14. Verfahren nach einem der Ansprüche 7 bis 13, **dadurch gekennzeichnet, dass** in Schritt c) mehr als 50 kg des Schmelzklebstoffs (3) pro Stunde aufgeschmolzen werden.

15. Verfahren nach einem der Ansprüche 7 bis 14, **dadurch gekennzeichnet, dass** die Vorrichtung (1) zum Aufschmelzen auf einer Auftragseinheit (43) angeordnet ist und der aufgeschmolzene Schmelzklebstoff (31) mittels Schwerkraft und durch den Pressdruck in die Auftragseinheit (43) fließt oder
die Vorrichtung (1) zum Aufschmelzen eine Pumpe (55) aufweist und der aufgeschmolzene Schmelzklebstoff (31) mittels der Pumpe (55) zu einer Auftragseinheit (43) gefördert wird, wobei die Auftragseinheit (43) bevorzugt einen Schlauch (57) und eine Schlitzdüse (59) umfasst.

## Claims

1. A device (1) for melting a hot-melt adhesive (3), comprising a heating plate (5), a plunger (7), the plunger (7) comprising a plunger end face (9), a mounting (11) and a storage container (13) having an inner volume (21) of more than 50 L, wherein the storage container (13) has a rigid lateral wall (15) and two opposite side faces (17, 19) and contains the hot-melt adhesive (3), the plunger end face (9) and the heating plate (5) are arranged opposite one another, and the storage container (13) is received in the mounting (11) in such a manner that the hot-melt adhesive (3) is arranged between the plunger (7) and the heating plate (5), wherein the storage container (13) can be removed from the device, **characterized in that** the heating plate (5) has a V-shaped surface structure (27) which is formed by ribs (69), and wherein the V-shaped surface structure (27) forms an outlet (29) for melted hot-melt adhesive (31).

2. The device as claimed claim 1, **characterized in that** the plunger end face (9) and the heating plate (5) enclose an angle α (25) of more than 30° with a horizontal plane (23).

3. The device as claimed in claim 1 or 2, **characterized in that** the storage container (13) has a cylindrical shape.

4. The device as claimed in one of claims 1 to 3, **characterized in that** the rigid lateral wall (15) of the storage container (13) is made of steel, plastics material or wood fibers.

5. The device as claimed in one of claims 1 to 4, **characterized in that** a flexible sleeve (33) is arranged in the storage container (13), which flexible sleeve has an opening (37) at least on one side (35) of the flexible sleeve (33), and the flexible sleeve (33) preferably has a sleeve material comprising aluminum.

6. A coating device (41) comprising an application unit (43) and a device (1) for melting as claimed in one of claims 1 to 5, wherein the device (1) for melting is arranged on the application unit (43).

7. A method for melting a hot-melt adhesive (3), comprising the following steps:
a) providing the hot-melt adhesive (3) in a storage container (13) having an inner volume (21) of more than 50 L, wherein the storage container (13) has a rigid lateral wall (15) and two opposite side faces (17, 19),
b) arranging the storage container (13), containing the hot-melt adhesive (3) in unmelted form (32), in a device (1) for melting as claimed in one of claims 1 to 5, comprising a heating plate (5), so that a first of the two opposite side faces (19) is arranged at the heating plate (5),
c) feeding the hot-melt adhesive (3) relative to the storage container (13) and in the direction towards the heating plate (5), wherein the two opposite side faces (17, 19) of the storage container (13) are open, so that the hot-melt adhesive (3) is brought into contact with the heating plate (5) and there is formed melted hot-melt adhesive (31), which flows away on the heating plate (5), wherein the device (1) for melting has a plunger (7), the plunger (7) comprising a plunger end face (9), and the hot-melt adhesive (3) is pressed against the heating plate (5) with a pressing pressure by means of the plunger (7), and the pressing pressure is preferably 6 bar and more.

8. The method as claimed in claim 7, **characterized in that** the storage container (13) has a longitudinal axis (45) which intersects the two opposite side faces (17, 19), and in step b), the storage container (13) is so arranged in the device (1) for melting that the longitudinal axis (45) of the storage container (13) encloses an angle β (47) of less than 80° with a horizontal plane (23), wherein the angle β (47) is preferably from 0° to 45°.

9. The method as claimed in claim 7 or 8, **characterized in that** the storage container (13) comprises two opposite side walls (49, 51) which are removed at the latest before step c), so that the two opposite side faces (17, 19) of the storage container (13) are open.

10. The method as claimed in one of claims 7 to 9, **characterized in that** the hot-melt adhesive (3) is arranged in the storage container (13) in a flexible sleeve (33), and the flexible sleeve (33) is opened before step b) at least at the first of the two opposite side faces (19), which in step b) is arranged at the heating plate (5), wherein during the opening preferably a portion of the flexible sleeve (33) is folded back against the rigid lateral wall (15).

11. The method as claimed in one of claims 7 to 10, **characterized in that** in step b), the rigid lateral wall (15) of the storage container (13) is arranged tightly against the heating plate (5) at the first of the two opposite side faces (19).

12. The method as claimed in claim 11, **characterized in that** the device (1) has at least one further plunger (53) which presses the rigid lateral wall (15) of the storage container (13) against the heating plate (5) for tight arrangement.

13. The method as claimed in one of claims 7 to 12, **characterized in that** in step c), the hot-melt adhesive (3) is warmed at the heating plate (5) to an adhesive temperature of more than 70°C.

14. The method as claimed in one of claims 7 to 13, **characterized in that** in step c), more than 50 kg of the hot-melt adhesive (3) are melted per hour.

15. The method as claimed in one of claims 7 to 14, **characterized in that** the device (1) for melting is arranged on an application unit (43), and the melted hot-melt adhesive (31) flows into the application unit (43) by means of gravity and by the pressing pressure,
or
the device (1) for melting has a pump (55), and the melted hot-melt adhesive (31) is fed to an application unit (43) by means of the pump (55), wherein the application unit (43) preferably comprises a hose (57) and a slot die (59).

## Revendications

1. Dispositif (1) pour la fusion d'un adhésif thermofusible (3), comprenant une plaque chauffante (5), un piston (7), le piston (7) comprenant une face frontale de piston (9), un support (11) et un réservoir (13) ayant un volume interne (21) de plus de 50 l, le réservoir (13) comprenant une paroi d'enveloppe rigide (15) et deux faces latérales opposées (17, 19) et contenant l'adhésif thermofusible (3), la face frontale de piston (9) et la plaque chauffante (5) étant agencées en face l'une de l'autre et le réservoir (13) étant reçu dans le support (11) de telle sorte que l'adhésif thermofusible (3) est agencé entre le piston (7) et la plaque chauffante (5), le réservoir (13) pouvant être sorti du dispositif, **caractérisé en ce que** la plaque chauffante (5) présente une structure de surface en forme de V (27), qui est formée par des nervures (69), et la structure de surface en forme de V (27) forme une évacuation (29) pour l'adhésif thermofusible fondu (31).

2. Dispositif selon la revendication 1, **caractérisé en ce que** la face frontale de piston (9) et la plaque chauffante (5) forment un angle α (25) de plus de 30° avec un plan horizontal (23).

3. Dispositif selon la revendication 1 ou 2, **caractérisé en ce que** le réservoir (13) présente une forme cylindrique.

4. Dispositif selon l'une quelconque des revendications 1 à 3, **caractérisé en ce que** la paroi d'enveloppe rigide (15) du réservoir (13) est fabriquée en acier, en matière plastique ou en fibres de bois.

5. Dispositif selon l'une quelconque des revendications 1 à 4, **caractérisé en ce qu'**une gaine flexible (33) est agencée dans le réservoir (13), qui présente une ouverture (37) sur au moins un côté (35) de la gaine flexible (33), et la gaine flexible (33) comprend de préférence un matériau de gaine contenant de l'aluminium.

6. Dispositif de revêtement (41) comprenant une unité d'application (43) et un dispositif (1) pour la fusion selon l'une quelconque des revendications 1 à 5, le dispositif (1) pour la fusion étant agencé sur l'unité d'application (43).

7. Procédé de fusion d'un adhésif thermofusible (3), comprenant les étapes suivantes :
a) la fourniture de l'adhésif thermofusible (3) dans un réservoir (13) ayant un volume interne (21) de plus de 50 l, le réservoir (13) comprenant une paroi d'enveloppe rigide (15) et deux faces latérales opposées (17, 19),
b) l'agencement du réservoir (13), contenant l'adhésif thermofusible (3) sous forme non fondue (32), dans un dispositif (1) pour la fusion selon l'une quelconque des revendications 1 à 5, comprenant une plaque chauffante (5), de telle sorte qu'une première des deux faces latérales opposées (19) est agencée sur la plaque chauffante (5),
c) le transport de l'adhésif thermofusible (3) par rapport au réservoir (13) et en direction de la plaque chauffante (5), les deux faces latérales opposées (17, 19) du réservoir (13) étant ouvertes, de telle sorte que l'adhésif thermofusible (3) est mis en contact avec la plaque chauffante (5) et de l'adhésif thermofusible fondue (31) est formé, qui s'écoule sur la plaque chauffante (5), le dispositif (1) pour la fusion comprenant un piston (7), le piston (7) comprenant une face frontale de piston (9), et l'adhésif thermofusible (3) étant pressé sur la plaque chauffante (5) au moyen du piston (7) à une force de pression, et la force de pression étant de préférence de 6 bar et plus.

8. Procédé selon la revendication 7, **caractérisé en ce que** le réservoir (13) présente un axe longitudinal (45), qui coupe les deux faces latérales opposées (17, 19) et, dans l'étape b), le réservoir (13) est agencé dans le dispositif (1) pour la fusion de telle sorte que l'axe longitudinal (45) du réservoir (13) forme un angle β (47) inférieur à 80° avec un plan horizontal (23), l'angle β (47) étant de préférence de 0° à 45°.

9. Procédé selon la revendication 7 ou 8, **caractérisé en ce que** le réservoir (13) comprend deux parois latérales opposées (49, 51), qui sont retirées au plus tard avant l'étape c), de telle sorte que les deux faces latérales opposées (17, 19) du réservoir (13) sont ouvertes.

10. Procédé selon l'une quelconque des revendications 7 à 9, **caractérisé en ce que** l'adhésif thermofusible (3) est agencé dans le réservoir (13) dans une gaine flexible (33), et la gaine flexible (33) est ouverte avant l'étape b) au moins au niveau de la première des deux faces latérales opposées (19) qui, dans l'étape b), est agencée sur la plaque chauffante (5), une partie de la gaine flexible (33) étant de préférence repliée sur la paroi d'enveloppe rigide (15) lors de l'ouverture.

11. Procédé selon l'une quelconque des revendications 7 à 10, **caractérisé en ce que**, dans l'étape b), la paroi d'enveloppe rigide (15) du réservoir (13) est agencée de manière étanche sur la plaque chauffante (5) au niveau de la première des deux faces latérales opposées (19).

12. Procédé selon la revendication 11, **caractérisé en ce que** le dispositif (1) comprend au moins un autre piston (53), qui presse la paroi d'enveloppe rigide (15) du réservoir (13) sur la plaque chauffante (5) pour un agencement étanche.

13. Procédé selon l'une quelconque des revendications 7 à 12, **caractérisé en ce que**, dans l'étape c), l'adhésif thermofusible (3) est porté à une température d'adhésif supérieure à 70 °C sur la plaque chauffante (5) .

14. Procédé selon l'une quelconque des revendications 7 à 13, **caractérisé en ce que**, dans l'étape c), plus de 50 kg de l'adhésif thermofusible (3) sont fondus par heure.

15. Procédé selon l'une quelconque des revendications 7 à 14, **caractérisé en ce que** le dispositif (1) pour la fusion est agencé sur une unité d'application (43), et l'adhésif thermofusible fondu (31) s'écoule dans l'unité d'application (43) au moyen de la force de pesanteur et sous l'effet de la force de pression,
ou
le dispositif (1) pour la fusion comprend une pompe (55), et l'adhésif thermofusible fondu (31) est transporté vers une unité d'application (43) au moyen de la pompe (55), l'unité d'application (43) comprenant de préférence un tuyau (57) et une buse à fente (59).
